# EUROPEAN PATENT APPLICATION

(11) **EP 4 524 927 A1**
(43) Date of publication of application: **19.03.2025**
(21) Application number: 23935633.0
(22) Date of filing: 09.10.2023
(51) Int. Cl.: G08G 1/0967, G06F 16/901

(54) **TARGET OBJECT TIME-SERIES ALIGNMENT METHOD, APPARATUS AND DEVICE, AND READABLE STORAGE MEDIUM**

(30) Priority: 25.07.2023 CN 202310915987
(71) Applicant: Dongfeng Commercial Vehicle Company Limited, Shiyan, Hubei 442001 (CN)
(72) Inventor: QIAN, Jinxin, Shiyan, Hubei 442001 (CN)
(74) Representative: Lohmanns Lohmanns & Partner mbB
(86) International application number: PCT/CN2023/123471
(87) International publication number: WO 2025/020300

(57) **Abstract**

Disclosed are a target object time sequence alignment method, apparatus, and device, and a readable storage medium, and relates to the technical field of automatic driving, and the method comprises the steps of constructing a target array based on the number of target objects when at least one target object is recognized during the target recognition of an initial frame; adding each target object to a corresponding index in the target array, constructing a mapping relationship between an ID value of the target object and the index, and setting a life duration value for each target object; adjusting each life duration value according to target matching results when performing target matching on subsequent frames; and when identifying a newly added target object and existing at least one target life duration value less than a preset frame drop threshold value, releasing a target index where the target object corresponding to the target life duration value is located, adding the newly added target object to the target index, updating the ID value corresponding to the target index to the ID value of the newly added target object, and setting a life duration value for the newly added target object, so as to realize the alignment of the target object time sequence.

## Description

### Field of the Invention

The present application relates to the field of autonomous driving technology, and in particular to a target object time sequence alignment method, apparatus, and device, and a readable storage medium.

### Background of the Invention

At present, the target object time sequence alignment method for achieving autonomous driving mainly comprises the following:
(1) According to the range of identity documents (IDs) assigned after target matching tracking, an array of the same size is established to store related information such as distance, speed, size of the target object. For example, if the ID range is 0-255, the size of the array is 256, and each array stores a structure with the same specification.
(2) The information of each target object at the same moment is stored separately according to the minimum time unit to ensure that the minimum time number in the time period is greater than the number of target objects. At this time, the target object information can be placed in a single structure, but the information for different target objects is distributed across different time instances.
(3) The tracking IDs of the fusion output targets are stored in an array in ascending order and each array stores a structure with the same specification.

Although the above three methods can achieve the time sequence alignment of the target objects, the first method requires defining a fixed array according to the ID range to store the target object information, while the actual number of target objects is often much smaller, which will result in significant waste of storage space. The second method requires trading time for space to achieve the time sequence alignment, but in fact, the target objects at the same moment should be emitted at the same time, resulting in time deviation, which in turn affects the analysis results. The third method requires high-quality target ID management first, that is, the result of the time sequence alignment is heavily dependent on the target ID management, making it difficult to achieve.

### Summary of the Invention

The present application provides a target object time sequence alignment method, apparatus, and device, and a readable storage medium to solve the problems existing in the related art.

In a first aspect, a target object time sequence alignment method is provided, comprising the following steps:
constructing a target array based on the number of target objects when recognizing at least one target object during target recognition of an initial frame;
adding each target object to a corresponding index in the target array, constructing a mapping relationship between an ID value of the target object and the index, and setting a life duration value for each target object;
adjusting each life duration value according to target matching results when performing target matching on subsequent frames; and
when identifying a newly added target object and existing at least one target life duration value less than a preset frame drop threshold value, releasing a target index where the target object corresponding to the target life duration value is located, adding the newly added target object to the target index, updating the ID value corresponding to the target index to the ID value of the newly added target object, and setting a life duration value for the newly added target object.

In some embodiment, an initial value of the life duration value is 1, and the step of adjusting each life duration value according to target matching results comprises:
for each target object in the target array, when the target matching result is a match, the life duration value is reset or incremented by 1 according to whether the life duration value of the target object is a negative integer; and
when the target matching result is a mismatch, the life duration value of the target object is reset or decremented by 1 according to whether the life duration value of the target object is a positive integer.

In some embodiment, the life duration value is reset or incremented by 1 according to whether the life duration value of the target object is a negative integer, comprising:
if the life duration value of the target object is a negative integer, the life duration value of the target object is reset to 1; and
if the life duration value of the target object is a non-negative integer, the life duration value of the target object is incremented by 1.

In some embodiment, the life duration value of the target object is reset or decremented by 1 according to whether the life duration value of the target object is a positive integer, comprising:
if the life duration value of the target object is a positive integer, the life duration value of the target object is reset to -1; and
if the life duration value of the target object is a non-positive integer, the life duration value of the target object is decremented by 1.

In some embodiment, the frame drop threshold value is a negative integer, when there are a plurality of target life duration values less than the frame drop threshold value, the step of releasing a target index where the target object corresponding to the target life duration value is located and adding the newly added target object to the target index comprises:
when there is one newly added target object, the target index where the target object corresponding to the smallest target life duration value is located is released, and the newly added target object is added to the target index; and
when there are a plurality of newly added target objects, the target indexes where the target objects corresponding to the target life duration values are located are released in ascending order of the target life duration values, and the plurality of the newly added target objects are added to the corresponding target indexes in the order of release.

In some embodiments, the method further comprises:
when the number of the newly added target objects is greater than that of the released target indexes, a length of the target array is increased according to a difference between the number of the newly added target objects and the number of the released target indexes to add the remaining newly added target objects.

In some embodiments, the method further comprises:
the life duration values corresponding to the target objects are performed traversal in descending order of indexes; and
when it is detected that a first life duration value is less than the frame drop threshold value, a first index where the target object corresponding to the first life duration value is located is deleted, and the traversal is stopped until it is detected that a second life duration value is greater than or equal to the frame drop threshold value.

In a second aspect, a target object time sequence alignment apparatus is provided, comprising:
a first construction unit, which is configured to construct a target array based on the number of target objects when recognizing at least one target object during target recognition of an initial frame;
a second construction unit, which is configured to add each target object to a corresponding index in the target array, construct a mapping relationship between an ID value of the target object and the index, and set a life duration value for each target object;
an adjustment unit, which is configured to adjust each life duration value according to target matching results when performing target matching on subsequent frames; and
an alignment unit, which is configured to release a target index where the target object corresponding to the target life duration value is located when identifying a newly added target object and existing at least one target life duration value less than a preset frame drop threshold value, add the newly added target object to the target index, update the ID value corresponding to the target index to the ID value of the newly added target object, and set a life duration value for the newly added target object.

In a third aspect, a target object time sequence alignment device is provided, comprising: a memory and a processor, wherein the memory stores at least one instruction, and the at least one instruction is loaded and executed by the processor so as to implement the above target object time sequence alignment method.

In a fourth aspect, a computer-readable storage medium is provided, the computer-readable storage medium stores a computer program, and when the computer program is executed by a processor, the above target object time sequence alignment method is implemented.

The present application relates to a target object time sequence alignment method, apparatus, and device, and a readable storage medium, which comprises the steps of constructing a target array based on the number of target objects when recognizing at least one target object during target recognition of an initial frame; adding each target object to a corresponding index in the target array, constructing a mapping relationship between an ID value of the target object and the index, and setting a life duration value for each target object; adjusting each life duration value according to target matching results when performing target matching on subsequent frames; and when identifying a newly added target object and existing at least one target life duration value less than a preset frame drop threshold value, releasing a target index where the target object corresponding to the target life duration value is located, adding the newly added target object to the target index, updating the ID value corresponding to the target index to the ID value of the newly added target object, and setting a life duration value for the newly added target object. The present application constructs an array of corresponding length according to the number of target objects, which can effectively avoid wasting storage space. At the same time, the target objects are managed through the size relationship between the life duration value of each target object and the frame drop threshold value to ensure the correspondence between the target object IDs and the index, thereby achieving the alignment of the target object time sequence. It not only takes into account time and space to ensure that subsequent analysis results are not affected, but also does not need to rely on high-quality target ID management, effectively ensuring the realization of the target object time sequence alignment.

### Brief Description of the Drawings

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.
Fig. 1 is a flow chart of a target object time sequence alignment method in the embodiment of the present application.
Fig. 2 is a specific flow chart of a target object time sequence alignment method in the embodiment of the present application.
Fig. 3 is a flow chart for deleting an outdated target at the end in the embodiment of the present application.
Fig. 4 is a flow chart for adding a newly added target object in the embodiment of the present application.
Fig. 5 is a schematic diagram of time sequence alignment from the Nth frame to the (N+1)th frame in the embodiment of the present application.
Fig. 6 is a structural diagram of a target object time sequence alignment device in the embodiment of the present application.

### Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

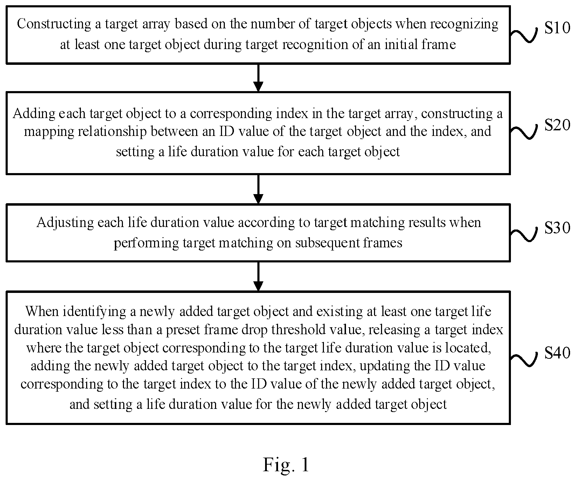

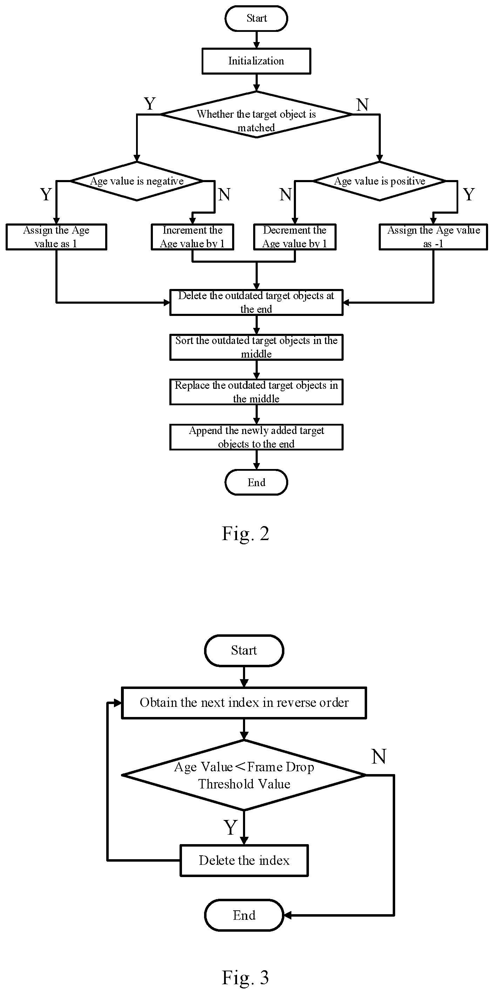

As shown in Fig. 1 and Fig. 2, the embodiment of the present application provides a target object time sequence alignment method, which comprises the following steps:
S10: A target array is constructed based on the number of target objects when at least one target object is recognized during target recognition of an initial frame.

Exemplarily, it is understandable that in the implementation method of target object time alignment in autonomous driving, the traditional method is often to define a fixed array in the form of ID range, and adopt the fixed array to store fusion target information. Although it has the advantage of convenient implementation, it will result in significant storage space wastage. For example, if there are only 10 actual fusion targets and the fixed array size is 256, then 96.1% of the space will be idle, and in most cases on highways or when there are few vehicles and pedestrians, the number of fusion targets will remain at a low output for a long time, which will also be a huge waste of storage space. In this embodiment, the array is defined by the number of target objects, so that the size of the array matches that of the actual target objects, thereby avoiding storage space wastage. Specifically, when the target recognition is performed in the initial frame, the target array will be constructed according to the number of recognized target objects. For example, if four target objects A, B, C and D are recognized in the initial frame, the size of the target array is defined as 4.

S20: Each target object is added to a corresponding index in the target array, a mapping relationship between an ID value of the target object and the index is constructed, and a life duration value is set for each target object; wherein the initial value of the life duration value is 1.

Exemplarily, in this embodiment, after the target array is defined, the target objects are added to the target array successively according to the order in which the target objects are added, and the indexes of the target array start from 1 and continue up to the number of target objects N. For example, the order in which the target objects A, B, C and D are added is B, C, A, D, as shown in Table 1, B, C, A, D are added to indexes 1 to 4 respectively. At the same time, as shown in Table 1, the target array will also store the ID values assigned to the target objects after matching, that is, to build a mapping relationship between the indexes and the ID values. For example, the ID value of B is 12, the ID value of C is 23, the ID value of A is 45, and the ID value of D is 5, then there are corresponding mapping relationships between Index1 and ID12, Index2 and ID23, Index3 and ID45, and Index4 and ID5. It can be understood that the specific information of the target object, such as distance, speed, size and other related information, can be queried through the ID value.

In addition, in this embodiment, a life duration value Age is set for each target object. The life duration value Age is configured to characterize the life cycle of the target object, that is, the life duration value, Age reveals both the duration the target object has been present and the duration it has been absent. Therefore, the target array will also store the life duration value Age of the target object. It should be noted that the initial value setting of the life duration value Age can be determined according to actual requirements and is not limited herein. For example, it is preferred to set the initial value of the life duration value Age of each target object to 1. This embodiment maintains the mapping relationship between the Indexes and the ID values through the life duration value Age, thereby achieving the target object time alignment.

**Table 1 Time Alignment Corresponding to Initial Frame**

| Index | ID | Age |
|---|---|---|
| 1 | 12 | 1 |
| 2 | 23 | 1 |
| 3 | 45 | 1 |
| 4 | 5 | 1 |

S30: Each life duration value is adjusted according to target matching results when target matching is performed on subsequent frames.

Exemplarily, it can be understood that in the fusion process of target recognition, the latter frame needs to match the target based on the recognition result of the previous frame to determine whether the target object in the previous frame still appears in the latter frame. If it appears, the match is successful, if not, the match fails. Therefore, in this embodiment, in the target matching process of the subsequent frames, the life change of each target object will be determined according to the matching results of the previous and next frames, and the change will be represented through adjusting the size of the life duration value Age of the target object.

For example, assuming that in the Nth frame, the life duration value Age of the target object E is 5, if the target object E still exists in the (N+1)th frame ((indicating a successful match), the Age thereof will be incremented by 1, that is, the Age value of the target object E is updated to 6, indicating that the target object E has appeared in 6 consecutive frames. For another example, assuming that in the Nth frame, the life duration value Age of the target object F is 3, if in the (N+1)th frame, the target object E does not exist (indicating a match failure), the Age thereof will be directly assigned to -1, indicating that the target object F does not appear in the (N+1)th frame, that is, the target object F has a frame drop problem.

It should be noted that the subsequent frame in this embodiment can refer to either the frame immediately following the initial frame (i.e., frame 2 after frame 1) or the frame immediately following frame N (i.e., frame N+1). For example, after completing the target recognition of the first frame, the target objects A, B, C, and D are obtained, and then the target objects A, B, C, and D are matched in the subsequent frame of the first frame (i.e., the second frame). For another example, after completing the target matching of the Nth frame, the target objects C, D, E and F are obtained, and then the target objects C, D, E and F are matched in the subsequent frame of the Nth frame (i.e., the (N+1)th frame).

Further, each life duration value is adjusted according to target matching results, comprising:
for each target object in the target array, when the target matching result is a match, the life duration value is reset or incremented by 1 according to whether the life duration value of the target object is a negative integer; and specifically, if the life duration value of the target object is a negative integer, the life duration value of the target object is reset to 1; and if the life duration value of the target object is a non-negative integer, the life duration value of the target object is incremented by 1;
when the target matching result is a mismatch, the life duration value of the target object is reset or decremented by 1 according to whether the life duration value of the target object is a positive integer; specifically, if the life duration value of the target object is a positive integer, the life duration value of the target object is reset to -1; and if the life duration value of the target object is a non-positive integer, the life duration value of the target object is decremented by 1.

Exemplarily, in this embodiment, when target matching is performed in the (N+1)th frame, regardless of whether the target object in the Nth frame is matched successfully, the life duration value Age of the target object needs to be updated to represent the life change of the target object. However, during this process, the mapping relationship between the ID value of the target object and the index will not change. Only after the index is released will the corresponding ID value be outdated.

Specifically, assuming that target object A in the target array corresponding to the Nth frame is successfully matched in the N+1th frame, that is, the target object A also exists in the (N+1)th frame, it is necessary to further determine whether the Age value of the target object A is a negative value, and update the Age value of the target object A according to the determination result. For example, if the Age value of the target object A is -2, it means that the target object A has experienced frame drop in 2 consecutive frames, that is, the target object A does not appear in both the Nth frame and the (N-1)th frame, but reappears in the (N+1)th frame. At this time, the Age value of the target object A will be reset to 1 to indicate that the target object A has entered a new lifecycle. For another example, if the Age value of the target object A is 4, it means that the target object A has appeared in four consecutive frames, that is, the target object A has appeared in the (N-3)th frame to the Nth frame, and continues to appear in the (N+1)th frame. At this time, the Age value of the target object A will be incremented by 1, that is, the Age value is updated to 5, to indicate that the target object A has appeared in five consecutive frames.

Assuming again that the target object B in the target array corresponding to the Nth frame is not successfully matched in the (N+1)th frame, that is, the target object B does not exist in the (N+1)th frame. At this time, it is necessary to further determine whether the Age value of the target object A is a positive value, and update the Age value of the target object B according to the determination result.

For example, the Age value of the target object B is -2, which means that the target object B has experienced frame drop in two consecutive frames, that is, the target object B does not appear in both the Nth frame and the (N-1)th frame; and since the target object B does not appear in the (N+1)th frame, the Age value of the target object B will be decremented by 1, that is, the Age value is updated to -3, to indicate that the target object B has not appeared in three consecutive frames. It can be understood that if the Age value is a non-positive value, the smaller the Age value, the longer the duration of the frame drop for the corresponding target object. For another example, the Age value of the target object B is 3, which means that the target object B has appeared in three consecutive frames, that is, the target object B appears in the (N-2)th frame to the Nth frame. However, the target object B does not appear in the (N+1)th frame, that is, the target object B has experienced frame drop in the (N+1)th frame. At this time, the Age value of the target object B will be directly reset to -1 to indicate that the target object B has entered a new lifecycle.

Further, the method further comprises:
the life duration values corresponding to the target objects are performed traversal in descending order of indexes; and
when it is detected that a first life duration value is less than the frame drop threshold value, a first index where the target object corresponding to the first life duration value is located is deleted, and the traversal is stopped until it is detected that a second life duration value is greater than or equal to the frame drop threshold value.

Exemplarily, in this embodiment, after completing the target matching in each frame and adjusting and updating the life duration value Age of each target object, the Age value corresponding to the target object will be performed traversal in descending order of Index, and then it will be determined whether the Index that meets the release condition needs to be deleted based on the size between the Age value and the frame drop threshold value, so as to reduce the size of the target array and effectively avoid wasting storage space. It should be understood that since there is a mapping relationship between the index values and the ID values in the target array that should not change, in order to avoid changes in the mapping relationship, the continuity of the index values in the target array needs to be maintained. Therefore, this embodiment will only delete the releasable index values at the end of the target array.

Specifically, as shown in Fig. 3, traversal is performed from back to front in the order of Index to detect whether the Age value is less than the frame drop threshold value, that is, detect whether the Index meets the release condition. If it does, it means that the corresponding target object and index are outdated target object and outdated index respectively, then the outdated Index is deleted until an Index that does not meet the release condition is encountered. For example, the frame drop threshold value is -3, as shown in Table 2, assuming that in the time sequence alignment corresponding to the (N-1) frame, there are target objects I, K, L, M, O, and P, and the corresponding ID values thereof are 4, 13, 75, 62, 8, and 48, respectively, and the corresponding Age values are 8, -5, 25, 6, -6, and -4, respectively.

**Table 2 Time Sequence Alignment Corresponding to Frame N-1**

| Index | ID | Age |
|---|---|---|
| 1 | 4 | 8 |
| 2 | 13 | -5 |
| 3 | 75 | 25 |
| 4 | 62 | 6 |
| 5 | 8 | -6 |
| 6 | 48 | -4 |

It can be seen that the Age value of the target object K is -5, the Age value of the target object O is -6, and the Age value of the target object P is -4. Since -5, -6, and -4 are all less than the frame drop threshold value -3, it means that the target objects K, O, and P are all outdated target object. Therefore, the indexes 2, 5, and 6 where the target objects K, O, and P are located are outdated indexes, that is, all belongs to the indexes that can be released, which means that the index release condition is met. However, since the Age value 6 of the target object M corresponding to Index4 is greater than the frame drop threshold value -3, that is, Index4 does not meet the release condition, that is, Index4 needs to continue to remain in the array. Therefore, in order to ensure the continuity of the index value, only Index5 and Index 6 that meet the release condition and the corresponding ID values thereof will be deleted, and the Age values corresponding to the target objects O and P will be deleted simultaneously, while Index2 will continue to remain in the array, that is, the size of the array is reduced from 6 to 4, avoiding storage space wastage.

S40: When a newly added target object is identified and at least one target life duration value less than a preset frame drop threshold value is existed, a target index where the target object corresponding to the target life duration value is located is released, the newly added target object is added to the target index, the ID value corresponding to the target index is updated to the ID value of the newly added target object, and a life duration value is set for the newly added target object. The frame drop threshold value is a negative integer.

Exemplarily, it should be noted that, before adding the newly added target object in the (N+1)th frame, this embodiment can first delete the outdated indexes at the end of the target array corresponding to the Nth frame, and then determine the release order of the outdated indexes based on the ascending order of the Age values of the outdated target objects in the target array, and then add the newly added target objects to the released indexes successively.

Certainly, instead of immediately deleting outdated indexes at the end of the target array, one can first determine if there are outdated indexes at the end. If so, the corresponding outdated indexes array is determined at the end, that is, traversal is performed from the back to the front in the order of Index to detect whether the Age value is less than the frame drop threshold value, that is, detect whether the Index meets the release condition. If it does, the Index is deleted until an Index that does not meet the release condition is encountered. For example, the array of outdated indexes corresponding to the end in Table 2 comprises Index5 and Index6. Then, the release order of the outdated indexes in the middle part (such as Index2 in Table 2) is determined based on the ascending order of the Age values of the outdated target objects in the target array, and then the newly added target objects are added to the released indexes successively until the outdated indexes in the middle part are replaced by all the newly added target objects. At this time, if there still exist newly added target objects that have not been added, the release order of the outdated indexes at the end part (such as Index5 and Index6 in Table 2) is determined based on the ascending order of the outdated index values, and then the newly added target objects that have not been added are added to the released indexes successively. It should be understood that if all the newly added target objects are added and there still exist outdated indexes at the end part, the outdated indexes can be deleted to avoid storage space wastage.

It should be noted that which of the above two methods is to be adopted can be determined according to actual requirements and is not limited herein. However, no matter which of the above methods is adopted, when the released indexes are not enough to meet the addition requirements of the newly added target objects, that is, when the number of newly added target objects is greater than that of outdated indexes, it is necessary to increase the length of the target array and append the newly added target objects to the end of the target array.

It should be understood that the purpose of setting the frame drop threshold value in this embodiment is to control the maximum number of frames in which the target object cannot be successfully matched, that is, after exceeding this number of frames, the array position where the target object is located may be used by other newly added target objects. It should be noted that the specific setting value of the frame drop threshold value can be determined according to actual requirements and is not limited herein. For example, the frame drop threshold value is preset to -3, wherein the minus sign "-" indicates frame drop, and the number "3" indicates that the maximum number of frame drops is 3. Assuming that in the Nth frame, the Age value corresponding to the target object A is -4, which means that the target object A has not been successfully matched in 4 consecutive frames (that is, the frame drop problem has occurred for 4 consecutive frames). Since it has exceeded the maximum frame drop number of 3, it means that the target object A is an outdated target object at this time, and the Index thereof is an outdated index, that is, the outdated Index becomes an object that can be released, that is, it may be used by other newly added target objects.

Assuming that, in the Nth frame, the Index where the target object G is located is 5 and the corresponding ID value is 69, the target Age value of the target object G is -4, and if the target object G is not matched in the (N+1)th frame, then the target Age value of the target object G will be updated to -5. At this time, if the newly added target object H is identified in the (N+1)th frame and the corresponding ID value is 36, Index5 where the target object G is located is released in the target array, and the newly added target object H is added to Index5, and ID69 corresponding to Index5 is replaced with ID36, that is, the mapping relationship between Index5 and ID36 is rebuilt. At the same time, the life duration value Age is set for the newly added target object H in the target array, and the initial value of the life duration value Age is set to 1 to indicate that the newly added target object H appears in the (N+1)th frame, that is, the newly added target object H has appeared in 1 consecutive frame.

Further, when there are a plurality of target life duration values less than the frame drop threshold value, a target index where the target object corresponding to the target life duration value is located is released and the newly added target object is added to the target index, comprising:
when there is one newly added target object, the target index where the target object corresponding to the smallest target life duration value is located is released, and the newly added target object is added to the target index; and
when there are a plurality of newly added target objects, the target indexes where the target objects corresponding to the target life duration values are located are released in ascending order of the target life duration values, and the plurality of the newly added target objects are added to the corresponding target indexes in the order of release.

Exemplarily, in this embodiment, assuming that the outdated target objects at the end of the target array have been deleted, if there are still outdated target objects in the middle part of the target array, the outdated target objects in the middle are replaced with the newly added target objects. For example, as shown in Table 2, Index5 and 6 have been deleted, and only the outdated target object K exists in the middle part of the target array. If there is only one newly added target object R and the corresponding ID value thereof is 2, the outdated target object K is directly replaced with the newly added target object R, and the ID value corresponding to Index2 is updated from 13 to 2, and the Age value is synchronously set to 1.

However, as shown in Table 3, if there are a plurality of outdated target objects in the middle part, the Age values corresponding to the plurality of the outdated target objects will be sorted in ascending order. Since the smaller the Age value, the longer the frame drop duration of the outdated target objects, that is, the smaller the probability of its reappearance, the outdated target objects can be deleted, that is, the outdated indexes where the outdated target objects are located will be deleted. Therefore, the only newly added target object R can be added to the outdated index where the outdated target object with the smallest Age value is located. For example, Index4 where the target object with the smallest Age value is located is first released, and then the newly added target object R is added to Index4, and the ID value corresponding to Index4 is updated from 62 to 2, and the Age value is synchronously set to 1.

**Table 3 Time Sequence Alignment Corresponding to Frame N-1**

| Index | ID | Age |
|---|---|---|
| 1 | 4 | 8 |
| 2 | 13 | -5 |
| 3 | 75 | 25 |
| 4 | 62 | -7 |
| 5 | 10 | 37 |
| 6 | 58 | 18 |

When there are two newly added target objects, namely, newly added target object R and newly added target object J, and the corresponding ID values are 2 and 9 respectively, Index4 where the target object corresponding to the smaller Age value of -7 is located is released, and then the newly added target object R is added to Index4, and the ID value corresponding to Index4 is updated from 62 to 2, and the Age value is synchronously set to 1. Then, Index2 where the target object corresponding to the larger Age value of -5 is located is released, and then the newly added target object J is added to Index2, and the ID value corresponding to Index2 is updated from 13 to 9, and the Age value is synchronously set to 1.

Further, the method further comprises:
when the number of the newly added target objects is greater than that of the released target indexes, a length of the target array is increased according to a difference between the number of the newly added target objects and the number of the released target indexes to add the remaining newly added target objects.

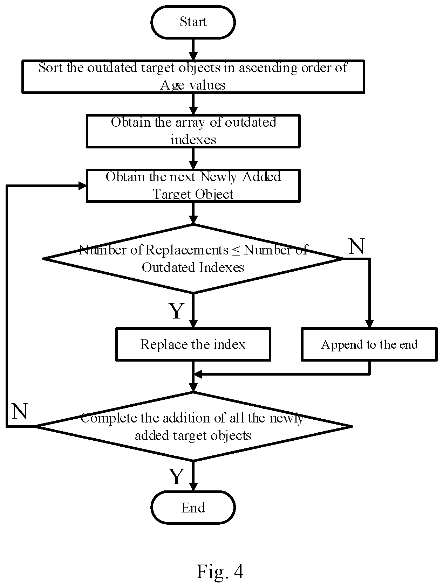

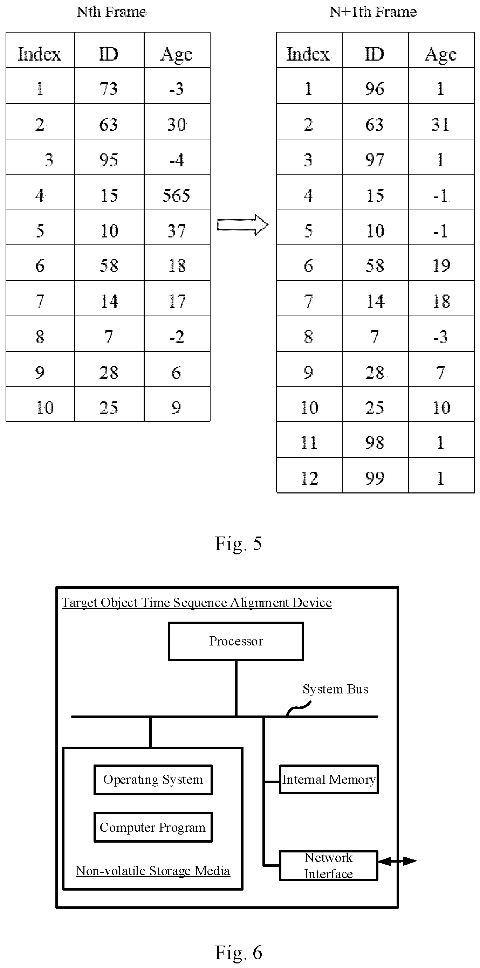

Exemplarily, it can be understood that the number of newly added target objects may be greater than that of released indexes in the array (i.e., the number of outdated indexes), that is, the number of outdated indexes is not enough to replace the newly added target objects. Therefore, as shown in Fig. 4, this embodiment will sort the outdated target objects in the middle part of the target array in ascending order of Age values, and then obtain the corresponding array of outdated indexes. For example, as shown in Fig. 5, the outdated Indexes in the middle part of the target array corresponding to the Nth frame comprise 1 and 3. After sorting in ascending order of Age values, the outdated indexes can be sorted as Index3 and Index1. There are 4 newly added target objects in the (N+1)th frame and the corresponding ID values are 96, 97, 98 and 99 respectively. The order in which the 4 newly added target objects appear (for the sake of simplicity of description, ID values are used herein to represent the newly added target objects) is 97, 96, 98 and 99 respectively.

Then, addition processing is performed on the target objects that have not been successfully matched in the (N+1)th frame (i.e., the newly added target objects). When performing addition processing on the target objects, it is necessary to first determine whether the number of replacements of target objects is less than or equal to the number of outdated indexes. If so, the newly added target objects are replaced at the corresponding outdated indexes; if not, the length of the target array is increased and the newly added target object is appended to the end of the target array.

For example, when adding a newly added target object with an ID value of 97, since only one newly added target object needs to be replaced, that is, the number of replacements is 1, and the number of outdated indexes is 2, that is, the number of replacements is less than the number of outdated indexes, the newly added target object with the ID value of 97 is replaced to the outdated index Index3, that is, the ID value corresponding to Index3 is replaced from 95 to 97, and the Age value corresponding to the newly added target object with the ID value of 97 is set to 1. Similarly, a newly added target object with an ID value of 96 is replaced to the outdated index Index1, that is, the ID value corresponding to Index1 is replaced from 73 to 96, and the Age value corresponding to the newly added target with the ID value of 96 is set to 1.

Since the number of replacements has reached 3 when adding a newly added target object with an ID value of 98, that is, the number of replacements has exceeded the number of outdated indexes, a new index needs to be added to the end of the target array, that is, Index11. Then, the newly added target object with the ID value of 98 is added to Index11, and a mapping relationship between Index11 and ID value of 98 is constructed, and the Age value corresponding to the newly added target object with the ID value of 98 is set to 1. Similarly, a new index is added to the end of the target array, that is, Index12. Then, a newly added target object with an ID value of 99 is added to Index12, and a mapping relationship between Index12 and ID value 99 is constructed, and the Age value corresponding to the newly added target object with the ID value of 99 is set to 1. At this point, the addition of all the newly added target objects is complete.

It can be seen that this embodiment constructs an array of corresponding length according to the number of target objects, which can effectively avoid storage space wastage. At the same time, the target objects are managed through the size relationship between the life duration value of each target object and the frame drop threshold value to ensure the correspondence between the target object ID and the index, thereby achieving the alignment of the target object time sequence, which not only takes into account time and space to ensure that subsequent analysis results are not affected, but also does not need to rely on high-quality target ID management, effectively ensuring the realization of the target object time sequence alignment. In addition, in the process of realizing target object time sequence alignment, the original information of the data does not need to be changed, and can be used in time after processing, which is efficient and convenient.

It should be noted that the step numbers of the steps in the embodiments of the present application do not limit the sequence of the operations in the technical solution of the present application.

It should be noted that those skilled in the art can clearly understand that, for the convenience and brevity of description, the specific working process of the apparatus and each unit described above can refer to the corresponding process in the above target object time sequence alignment method in the embodiment, and will not be repeated herein.

The target object time sequence alignment apparatus provided in the above embodiment can be implemented in the form of a computer program, and the computer program can be run on the target object time sequence alignment device as shown in Fig. 6.

The embodiment of the present application also provides a target object time sequence alignment device, which comprises: a memory, a processor and a network interface connected via a system bus, wherein the memory stores at least one instruction, and at least one instruction is loaded and executed by the processor so as to implement all or part of the steps of the above target object time sequence alignment method.

The network interface is configured to perform network communication, such as sending assigned tasks. Those skilled in the art can understand that the structure shown in Fig. 6 is merely a block diagram of a partial structure related to the solution of the present application, and does not constitute a limitation on the computer device to which the solution of the present application is applied. The specific computer device can comprise more or fewer components than shown in the figure, or combine certain components, or have a different arrangement of components.

The processor can be a central processing unit (CPU), or other general-purpose processors, digital signal processors (DSPs), application specific integrated circuits (ASICs), field-programmable gate arrays (FPGAs) or other programmable logic devices, discrete gates or transistor logic devices, discrete hardware components, etc. The general processor can be a microprocessor or any conventional processor, etc. The processor is the control center of the computer device, and various interfaces and lines are adopted to connect various parts of the entire computer device.

The memory can be configured to store computer programs and/or modules, and the processor implements various functions of the computer device through running or executing the computer programs and/or modules stored in the memory, and through calling the data stored in the memory. The memory can mainly comprise a storage program area and a storage data area, wherein the storage program area can store the operating system, at least one application program required by the function (such as video playback function, image playback function, etc.); and the storage data area can store the data created according to the use of the mobile phone (such as video data, image data, etc.). In addition, the memory can comprise high-speed random-access memories, and further comprise non-volatile memories, such as hard disks, memories, plug-in hard disks, smart media cards (SMC), secure digital (SD) cards, flash cards (Flash Card), at least one disk memory device, flash devices, or other volatile solid-status memory devices.

The embodiment of the present application further provides a computer-readable storage medium on which a computer program is stored, when the computer program is executed by the processor, all or part of the steps of the above target object time sequence alignment method are implemented.

The embodiments of the present application achieve all or part of the processes mentioned above, and can also be accomplished through instructing related hardware by means of the computer program, the computer program can be stored in a computer readable storage medium, and when executed by the processor, the computer program can implement the steps of the various method mentioned above. The computer program comprises computer program code, which can be in the form of source code, object code, executable file or some intermediate. The computer-readable media can comprise any entity or device capable of carrying computer program code, recording media, U disk, mobile hard disk, magnetic disk, optical disk, computer memory, read-only memory (ROM), random access memory (RAM), electrical carrier signal, telecommunication signal and software distribution medium. It should be noted that the contents contained in the computer-readable media can be appropriately increased or decreased according to the requirements of legislation and patent practice in jurisdictions. For example, in some jurisdictions, according to the legislation and the patent practice, the computer-readable media does not comprise electrical carrier signals and telecommunication signals.

Those skilled in the art should understand that the embodiments of the present application can be provided as methods, systems, servers or computer program products. Therefore, the present application can adopt the form of a complete hardware embodiment, a complete software embodiment, or an embodiment combining software and hardware. Furthermore, the present application can be in the form of a computer program product implemented in one or more computer available storage media (comprising but not limited to disk memory and optical memory, etc.) with computer available program codes.

Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The present application is described with reference to flowcharts and/or block diagrams of methods, devices (systems), and computer program products in embodiments of the present application. It should be understood that each process and/or block in the flowchart and/or block diagram, and the combination of processes and/or blocks in the flowchart and/or block diagram can be implemented by computer program instructions. These computer program instructions can be provided to a general-purpose computer, a special-purpose computer, an embedded processor, or other programmable data processing equipment so as to generate a machine, so that the instructions executed by the computer or other programmable data processing equipment are caused to generate a device for implementing the functions specified in one or more processes in the flowchart and/or one or more blocks in the block diagram.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the spirit or scope of the present application. Therefore, the present application will not be limited to the embodiments shown in this document, but will be subject to the widest scope consistent with the principles and novel features applied herein.

## Claims

1. A target object time sequence alignment method, comprising following steps:
constructing a target array based on the number of target objects when recognizing at least one target object during target recognition of an initial frame;
adding each target object to a corresponding index in the target array, constructing a mapping relationship between an ID value of the target object and the index, and setting a life duration value for each target object;
adjusting each life duration value according to target matching results when performing target matching on subsequent frames; and
when identifying a newly added target object and existing at least one target life duration value less than a preset frame drop threshold value, releasing a target index where the target object corresponding to the target life duration value is located, adding the newly added target object to the target index, updating the ID value corresponding to the target index to the ID value of the newly added target object, and setting a life duration value for the newly added target object.

2. The target object time sequence alignment method according to claim 1, wherein an initial value of the life duration value is 1, and the step of adjusting each life duration value according to target matching results comprises:
for each target object in the target array, when the target matching result is a match, the life duration value is reset or incremented by 1 according to whether the life duration value of the target object is a negative integer; and
when the target matching result is a mismatch, the life duration value of the target object is reset or decremented by 1 according to whether the life duration value of the target object is a positive integer.

3. The target object time sequence alignment method according to claim 2, wherein the life duration value is reset or incremented by 1 according to whether the life duration value of the target object is a negative integer, comprising:
if the life duration value of the target object is a negative integer, the life duration value of the target object is reset to 1; and
if the life duration value of the target object is a non-negative integer, the life duration value of the target object is incremented by 1.

4. The target object time sequence alignment method according to claim 2, wherein the life duration value of the target object is reset or decremented by 1 according to whether the life duration value of the target object is a positive integer, comprising:
if the life duration value of the target object is a positive integer, the life duration value of the target object is reset to -1; and
if the life duration value of the target object is a non-positive integer, the life duration value of the target object is decremented by 1.

5. The target object time sequence alignment method according to claim 1, wherein the frame drop threshold value is a negative integer, when there are a plurality of target life duration values less than the frame drop threshold value, the step of releasing a target index where the target object corresponding to the target life duration value is located and adding the newly added target object to the target index comprises:
when there is one newly added target object, the target index where the target object corresponding to the smallest target life duration value is located is released, and the newly added target object is added to the target index; and
when there are a plurality of newly added target objects, the target indexes where the target objects corresponding to the target life duration values are located are released in ascending order of the target life duration values, and the plurality of the newly added target objects are added to the corresponding target indexes in the order of release.

6. The target object time sequence alignment method according to claim 5, wherein the method further comprises:
when the number of the newly added target objects is greater than that of the released target indexes, a length of the target array is increased according to a difference between the number of the newly added target objects and the number of the released target indexes to add the remaining newly added target objects.

7. The target object time sequence alignment method according to claim 1, wherein the method further comprises:
the life duration values corresponding to the target objects are performed traversal in descending order of indexes; and
when it is detected that a first life duration value is less than the frame drop threshold value, a first index where the target object corresponding to the first life duration value is located is deleted, and the traversal is stopped until it is detected that a second life duration value is greater than or equal to the frame drop threshold value.

8. A target object time sequence alignment apparatus, comprising:
a first construction unit, which is configured to construct a target array based on the number of target objects when recognizing at least one target object during target recognition of an initial frame;
a second construction unit, which is configured to add each target object to a corresponding index in the target array, construct a mapping relationship between an ID value of the target object and the index, and set a life duration value for each target object;
an adjustment unit, which is configured to adjust each life duration value according to target matching results when performing target matching on subsequent frames; and
an alignment unit, which is configured to release a target index where the target object corresponding to the target life duration value is located when identifying a newly added target object and existing at least one target life duration value less than a preset frame drop threshold value, add the newly added target object to the target index, update the ID value corresponding to the target index to the ID value of the newly added target object, and set a life duration value for the newly added target object.

9. A target object time sequence alignment device, comprising: a memory and a processor, wherein the memory stores at least one instruction, and the at least one instruction is loaded and executed by the processor so as to implement the target object time sequence alignment method according to any one of claims 1 to 7.

10. A computer-readable storage medium, comprising: a computer program, and when the computer program is executed by a processor, the target object time sequence alignment method according to any one of claims 1 to 7 is implemented.
